Europäisches Patentamt

European Patent Office

Office européen des brevets

(19)

(11) Veröffentlichungsnummer: **0 101 403**

A2

# (12) EUROPÄISCHE PATENTANMELDUNG

(21) Anmeldenummer: 83730078.9

(22) Anmeldetag: 10.08.83

(51) Int. Cl.³: **B 60 C 27/10**
B 60 C 27/06

(30) Priorität: 13.08.82 DE 3230651

(43) Veröffentlichungstag der Anmeldung:
22.02.84 Patentblatt 84/8

(84) Benannte Vertragsstaaten:
AT CH DE FR GB IT LI SE

(71) Anmelder: RUD-Kettenfabrik Rieger & Dietz GmbH u.
Co.
Friedensinsel
D-7080 Aalen 1(DE)

(72) Erfinder: Holzwarth, Dietmar, Ing.(grad.)
Vogelhofstrasse 51
D-7070 Schwäbish Gmünd(DE)

(72) Erfinder: Kaiser, Helmut, Dipl.-Ing.
Breslauer Strasse 5
D-7080 Aalen-Unterkochen(DE)

(74) Vertreter: Böning, Manfred, Dr. Ing. et al,
Patentanwälte Dipl.-Ing. Dieter Jander Dr. Ing. Manfred
Böning Kurfürstendamm 66
D-1000 Berlin 15(DE)

(54) Gleitschutzkette.

(57) Bei einer Gleitschutzkette mit einer von einem elastischen Bügel gebildeten inneren Halterung werden die Bügelenden durch einen Spannkettenstrang (9) überbrückt, der im Bereich der Reifeninnenseite eine ihn umlenkende Hülse (10) passiert. Die Innenwand (15) der Hülse ist an einer Seite ihrer Ein- und Austrittsöffnung mit Führungskerben (16,17) versehen, die ein Verhaken der Kettenglieder beim Passieren der Hülse (10) verhindern.

Fig. 3

- 1 -

Gleitschutzkette

Die Erfindung betrifft eine Gleitschutzkette für Fahrzeugreifen mit je
einer bei montierter Kette gegen die
Innenseite und die Außenseite des Reifens zur Anlage kommenden Halterung
für sich über die Lauffläche erstreckende Kettenstrangabschnitte, bei der die
innere Halterung von einem über den Reifen stülpbaren federelastischen Bügel gebildet wird, dessen Öffnung durch einen
Spannkettenstrang überbrückt ist, der
nach dem Passieren einer von einer Hülse
gebildeten Umlenkung über die Lauffläche
des Reifens zu einem Führungselement an
der äußeren Halterung geführt ist, wobei
die mittels einer Verbindungslasche mit
einem Ende des Bügels verbundene Hülse
den Spannkettenstrang auf einer Länge L
umschließt, die größer ist als die Differenz aus der Teilung t der Glieder des
Spannkettenstranges und dem Glieddrahtdurchmesser dieser Glieder.

Eine Gleitschutzkette der vorstehenden
Art ist aus der DE-GMS 81 08 431 bekannt.
Es hat sich als zweckmässig erwiesen, bei
der bekannten Gleitschutzkette die Innenwand der Hülse nicht zylindrisch, sondern
derart rotationssymmetrisch auszubilden,
daß sie sich vom Zentrum der Hülse zu den
Hülsenenden etwas erweitert. Die ballige Wandausbildung erleichtert den Einlauf des Spannkettenstranges in die Hülse. Die Praxis hat jedoch gezeigt, daß es ungeachtet der Balligkeit der Wandausbildung zum Verhaken von Gliedern des Spannkettenstranges an den Kanten der Ein- und Austrittsöffnungen der Hülse kommt. Durch eine Vergrößerung der Stützzone für den Spannkettenstrang innerhalb der Hülse lassen sich die angedeuteten Schwierigkeiten deshalb nicht eliminieren, weil den Abmessungen und dem Gewicht der Hülse Grenzen gesetzt sind, die auch gegen die Verwendung einer Umlenkrolle sprechen.

Der Erfindung liegt die Aufgabe zugrunde, bei einer Gleitschutzkette der in Betracht gezogenen Art die zum Umlenken des Spannkettenstranges dienende Hülse derart auszubilden, daß ein Verhaken des Spannkettenstranges im Bereich der Ein- und Austrittsöffnungen praktisch ausscheidet.

Diese Aufgabe wird erfindungsgemäß dadurch gelöst, daß die Innenwand der Hülse mindestens an ihrer der Verbindungslasche abgewandten Seite an der Ein- und Austrittsöffnung für den Spannkettenstrang mit Führungskerben versehen ist.

Die erfindungsgemässe Gleitschutzkette bietet den Vorteil, daß ein Verhaken von Gliedern des Spannkettenstranges an den Ein- und Austrittsöffnungen der Hülse dadurch verhindert wird, daß die in Zugrichtung des Spannkettenstranges jeweils vorn liegenden Buge oder Bogen der Glieder des Spannkettenstranges durch die Führungskerben stoßfrei in die Hülse geleitet werden, wobei das sich jeweils im Innern der Hülse befindliche sich mit seinen Schenkeln an der Hülsenwand abstützende Kettenglied den glatten Einlauf unterstützt. Ein weiterer Vorteil ist darin zu erblicken, daß die Führungskerben eine Orientierung des Spannkettenstranges bewirken. Diese Orientierung wirkt einem Verdrehen des Spannkettenstranges und einem hieraus resultierenden Verklanken der Glieder des Spannkettenstranges entgegen.

Die Erfindung wird im folgenden anhand der beigefügten Zeichnung näher erläutert. Es zeigen

Figur 1 die Draufsicht auf die von einem Federstahlbügel gebildete innere Halterung einer ersten Gleitschutzkette;

Figur 2 die Draufsicht auf die von einem Federstahlbügel gebildete innere Halterung einer zweiten Gleitschutzkette;

Figur 3 einen Schnitt durch die zum Umlenken des Spannkettenstranges der Gleitschutzkette gemäß Figur 1 dienende Hülse;

Figur 4 eine Stirnansicht der Hülse gemäß Figur 3;

Figur 5 einen Schnitt durch die zur Umlenkung des Spannstranges dienende Hülse der Gleitschutzkette gemäß Figur 2 und

Figur 6 eine der Figur 4 entsprechende Stirnansicht einer Hülse abgewandelter Bauart.

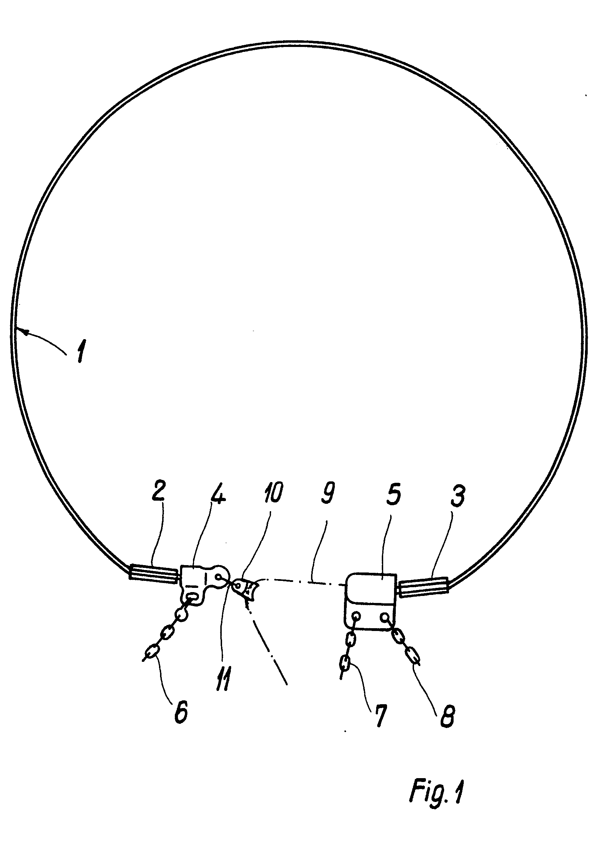

In Figur 1 ist 1 ein federelastischer Bügel, dessen Enden 2 und 3 mit drehbaren Anschlußstücken 4 und 5 versehen sind. An die Anschlußstücke 4 und 5 greifen Kettenstrangstücke 6, 7 und 8 eines Laufnetzes an. Mit dem Anschlußstück 5 ist außerdem ein Spannkettenstrang 9 verbunden, der eine zu seiner Umlenkung dienende Hülse 10 passiert, die über ein Zwischenglied 11 mit dem Anschlußstück 4 verbunden ist.

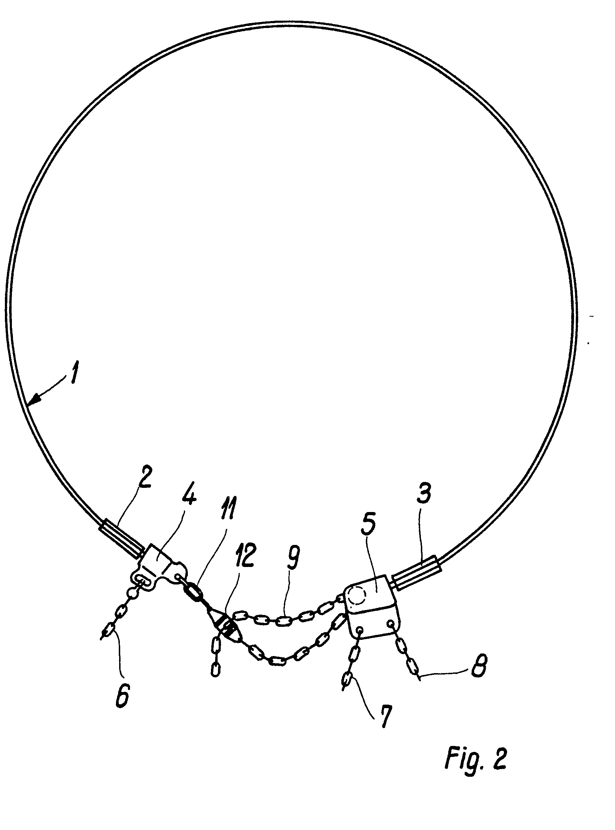

Während bei dem Ausführungsbeispiel gemäß Figur 1 der Spannkettenstrang vom Anschlußstück 5 zur Hülse 10 und von dort direkt über das Laufnetz zur nicht dargestellten vorderen äusseren Halterung der Gleitschutzkette geführt ist, findet bei dem Ausführungsbeispiel gemäß Figur 2 eine flaschenzugartige Anordnung des Spannkettenstranges Verwendung. Einander entsprechende Teile sind in beiden Zeichnungen mit den gleichen Bezugszeichen versehen. Während beim ersten Ausführungsbeispiel der Spannkettenstrang 9 an das Anschlußstück 5 angeschlossen ist, geht er beim zweiten Ausführungsbeispiel von der Hülse 12 aus, die in diesem Fall über mehrere Zwischenglieder wiederum mit dem Anschlußstück 4 in Verbindung steht.

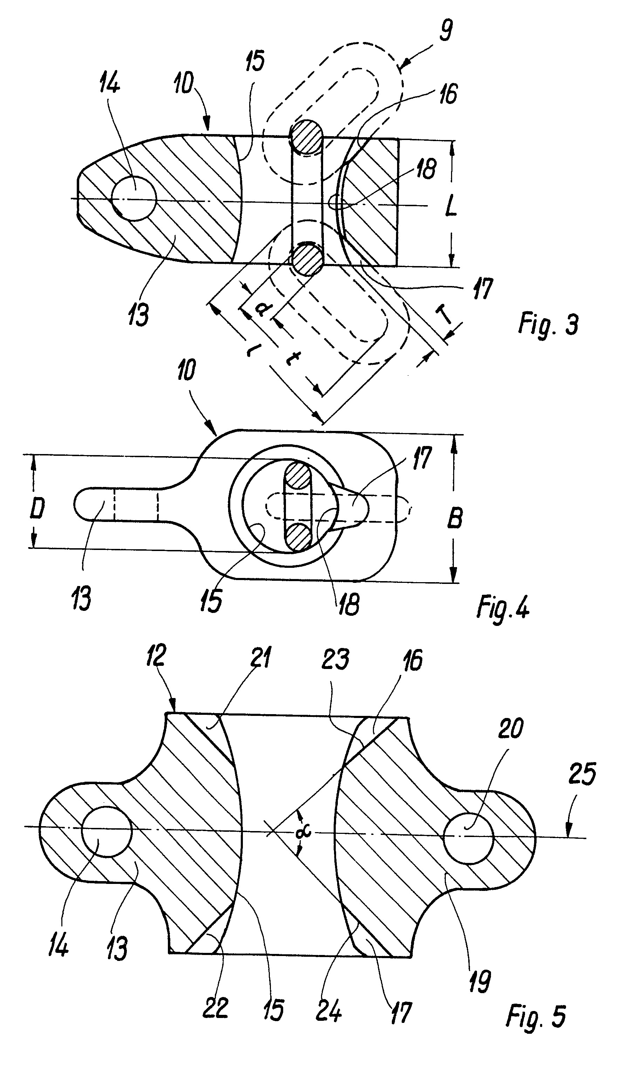

Einzelheiten der Hülsen 10 und 12 ergeben sich aus den Figuren 3 bis 5.

Die Hülse 10 gemäß den Figuren 3 und 4 besitzt eine Verbindungslasche 13 mit einer Öffnung 14 zur Aufnahme eines Zwischengliedes 11. Die Innenwand 15 der Hülse ist leicht ballig ausgebildet. An ihrer der Verbindungslasche 13 abgewandten Seite ist die Innenwand im Bereich der Ein- und Auslaßöffnung für den Spannkettenstrang 9 mit Führungskerben 16 und 17 versehen. Die Tiefe T dieser Führungskerben 16 und 17 ist vorzugsweise nicht größer als der Durchmesser d des für die Herstellung der Glieder des Spannkettenstranges verwendeten Drahtes.

Die Länge L der Innenwandung 15 ist größer als die Differenz aus der Teilung t der Glieder des Spannkettenstranges und dem Glieddrahtdurchmesser d dieser Glieder. Sie sollte einen Wert in der Größenordnung von der 1,2-fachen Teilung t nicht überschreiten.

Die dem Zentrum der Hülse zugewandten Enden der Führungskerben 16 und 17 sind im dargestellten Ausführungsbeispiel gemäß Figuren 3 und 4 durch eine Führungsmulde 18 miteinander verbunden.

B ist die maximale Breite der Führungshülse. Dieser Breite sind aufgrund des beschränkten Raumes zwischen der Innenseite eines Fahrzeugreifens und der Karosserie des Fahrzeuges Grenzen gesetzt. Sie sollte auch aus Gewichtsgründen möglichst klein sein. Der kleinste Durchmesser D der Innenwand 15 ist so gewählt, daß die Kettenglieder des Spannkettenstranges ohne Schwierigkeiten die Hülse passieren können. In der Praxis werden Werte für D in der Größenordnung von der 1,1 - 1,2-fachen äußeren Breite der Kettenglieder des Spannkettenstranges 9 gewählt.

Zur Beschreibung der Hülse 12 gemäß Figur 5 werden weitgehend die gleichen Bezugszeichen verwendet wie zur Beschreibung der Hülse 10. Die Hülse 12 besitzt zusätzlich zur Verbindungslasche 13 eine Anschlußlasche 19 mit einer Öffnung 20 für das Endglied eines Spannkettenstranges 9. Sie ist außerdem mit zusätzlichen Führungskerben 21 und 22 versehen. In Figur 5 ist gezeigt, daß die Grundlinien 23 und 24 der Führungskerben 21 und 22 schräg zur Längsachse 25 der Hülse 12 verlaufen. Vorzugsweise schneiden sie sich unter einem Winkel $\alpha$ von etwa 90°.

Aufgrund der beschriebenen Ausbildung der Hülsen 10 und 12 wird erreicht, daß die Buge der Kettenglieder des Spannkettenstranges beim Einlauf in die Hülsen nicht gegen die Kanten der Ein- und Austrittsöffnungen der Wandung 15 anschlagen. Die jeweils einlaufenden Kettenglieder werden beim Einlauf einerseits durch das sich jeweils in der Hülse befindliche Kettenglied und andererseits durch die Führungskerben 16,17,21 und 22 verhakungsfrei durch die Hülse geführt.

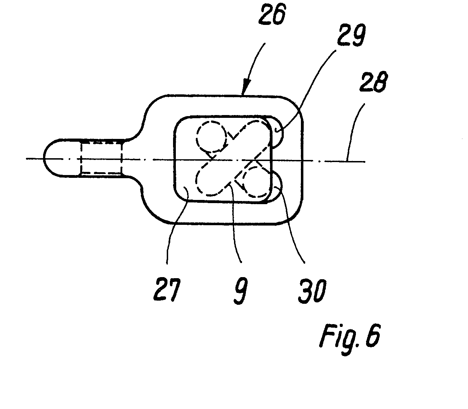

Die in Figur 6 dargestellte Hülse 26 besitzt einen Durchlaß 27, dessen Breite nur wenig größer als die Breite des unter einem Winkel von $45^{o}$ zur Längsachse 28 stehenden sogenannten Kettenkreuzes der Spannkette 9 ist. Bei einer derartigen, besonders schmal bauenden Hülse werden zur Sicherstellung eines verhakungsfreien Durchlaufs des Spannkettenstranges 9 im Bereich beider Stirnseiten der Hülse 26 jeweils zwei Führungskerben 29 und 30 benötigt.

0101403

Patentansprüche

1. Gleitschutzkette für Fahrzeugreifen mit je einer bei montierter Kette gegen die Innenseite und die Außenseite des Reifens zur Anlage kommenden Halterung für sich über die Lauffläche erstreckende Kettenstrangabschnitte (6,7,8), bei der die innere Halterung von einem über den Reifen stülpbaren federelastischen Bügel (1) gebildet wird, dessen Öffnung durch einen Spannkettenstrang (9) überbrückt ist, der nach dem Passieren einer von einer Hülse (10,12,26) gebildeten Umlenkung über die Lauffläche des Reifens zu einem Führungselement an der äußeren Halterung geführt ist, wobei die mittels einer Verbindungslasche (13) mit einem Ende des Bügels (1) verbundene Hülse (10,12,26) den Spannkettenstrang auf einer Länge L umschließt, die größer ist als die Differenz aus der Teilung t der Glieder des Spannkettenstranges und dem Glieddrahtdurchmesser dieser Glieder, dadurch gekennzeichnet, daß die Innenwand (15) der Hülse (10,12,26) mindestens an ihrer der Verbindungslasche (13) abgewandten Seite an der Ein- und Austrittsöffnung für den Spannkettenstrang (9) mit Führungskerben (16,17,21,22,29,30) versehen ist.

2. Gleitschutzkette nach Anspruch 1, dadurch gekennzeichnet, daß die Hülse (10) zwei in einer Ebene liegende Führungskerben (16,17) aufweist.

3. Gleitschutzkette nach Anspruch 1, dadurch gekennzeichnet, daß die Hülse (12) vier in einer Ebene liegende Führungskerben (16,17,21,22) aufweist.

4. Gleitschutzkette nach einem der Ansprüche 1 bis 3, dadurch gekennzeichnet, daß die Führungskerben (16,17,21,22) in der Ebene der Verbindungslaschen (13) liegen.

5. Gleitschutzkette nach einem der Ansprüche 1 bis 4, dadurch gekennzeichnet, daß die Grundlinien (23,24) der Führungskerben (21,22) schräg zur Längsachse (25) der Hülse (12) verlaufen.

6. Gleitschutzkette nach einem der Ansprüche 1 bis 5, dadurch gekennzeichnet, daß die Grundlinien der einer Seite der Innenwand (15) der Hülse (12) zugeordneten Führungskerben (21,22) sich unter einem Winkel ($\alpha$) von etwa 90° schneiden.

7. Gleitschutzkette nach einem der Ansprüche 1 bis 6, dadurch gekennzeichnet, daß die jeweils einer Seite der Innenwand (15) der Hülse (10) zugeordneten Führungskerben (16,17) in der Mitte der Innenwand über eine Führungsmulde (18) ineinander übergehen.

8. Gleitschutzkette nach einem der Ansprüche 1 bis 7, dadurch gekennzeichnet, daß die Innenwand (15) der Hülse (10.12) außerhalb des Bereiches der Führungskerben (16,17,21,22) ballig ist.

**0101403**

9. Gleitschutzkette nach Anspruch 1, dadurch gekennzeichnet, daß die Hülse (26) einen im wesentlichen viereckigen Durchlaß (27) aufweist, dessen Ein- und Austrittsseite im Bereich jeweils zweier abgerundeter Ecken mit Führungskerben (29,30) versehen sind.

10. Gleitschutzkette nach einem der Ansprüche 1 bis 9, dadurch gekennzeichnet, daß die größte Tiefe (T) der Führungskerben (16, 17,21,22,29,30) höchstens gleich dem Drahtdurchmesser (d) der Glieder des Spannkettenstranges (9) ist.

Fig. 1

0101403

1/4

Fig. 2

Fig. 3

Fig. 4

Fig. 5

*Fig. 6*